# EUROPEAN PATENT APPLICATION

(11) **EP 2 927 669 A1**
(43) Date of publication of application: **07.10.2015**
(21) Application number: 12888547.2
(22) Date of filing: 14.11.2012
(51) Int. Cl.: G01N 21/55

(54) **DYNAMIC METHOD AND DEVICE FOR MEASURING THE LUMINANCE AND BACK-REFLECTION OF ROAD MARKINGS AND SIGNS AND OBTAINING THE SHAPE, POSITION AND DIMENSIONS THEREOF**

(71) Applicant: Fundación Cidaut, 47151 Boecillo (ES)
(72) Inventor: GUTIÉRREZ MÉNDEZ, José Antonio, E-47151 Boecillo (Valladolid) (ES); MANSILLA GALLO, Alberto, E-47151 Boecillo (Valladolid) (ES); REAL CORTÉS, Jesús Ángel, E-47151 Boecillo (Valladolid) (ES); ORTIZ DE LEJARAZU MACHÍN, Diego, E-47151 Boecillo (Valladolid) (ES)
(74) Representative: Capitán García, Maria Nuria
(86) International application number: PCT/ES2012/070791
(87) International publication number: WO 2014/076324

(57) **Abstract**

A dynamic measurement procedure of the luminance and retroreflection of the road markings and signals and obtention of the dimensions of the same from a vehicle that circulates on the road; illuminating the zone of interest; knowing the position of the vehicle; measuring the luminance by means of a light sensor in a single pass, at known distances or intervals; identifying and extracting one or several road markings and signals simultaneously in each measurement of luminance by means of algorithms; referencing the luminance both geometrically and in time, as well as the obtention of the shape, position and dimensions of the same; and the device for carrying out said procedure, which includes a luminous source, a system of global positioning of the vehicle, a light sensor, a camera, a data processor and a data storage device.

## Description

### OBJECT OF THE INVENTION

The present invention refers to a dynamic procedure for the measurement of luminance and retroreflection of roadway markings and signals that are commonly used on the road for traffic regulation or to inform drivers, and also the obtention of the shape, position and dimensions of the same, and the device for carrying out said procedure.

The procedure is carried out in a dynamic and simultaneous manner on several road markings and signals deployed on highways, roads or streets, either continuous, discontinuous, having arbitrary shapes, signalling elements painted on the road, straight arrows or having a given angle, specific symbols or letters on the surface, etc.

The device is a vehicle that includes an illuminating source, a global vehicle positioning system, a light sensor, a camera, a data processor and a data storage device.

### BACKGROUND OF THE INVENTION

The on site assessment of the essential visibility requirements of road markings and signals, that is, its luminance and retroreflection, both during its application and during its useful life, constitutes the most important problem in relation to the quality control and preservation of horizontal signals and markings.

To this end, means based on portable equipment are traditionally employed, which are expensive, slow and dangerous for the operator, besides being unable to provide an exact overall conclusion of the state of the road signals and markings on an large section.

Mobile measurement equipment is also used to provide the possibility of carrying out a reliable, quick and risk free assessment of the visibility (daytime and nighttime) of road markings along extensive highway networks.

For example, patent document EP1486799, published on 15 December 2004, discloses a procedure and an apparatus for determining the state of road markings by measuring several points of a road marking with an apparatus that comprises an illuminator, a sensor comprising several adjacent detectors, means for controlling the illuminator, and a data processing and control unit.

Said procedure includes measuring the luminance of the interior portion of the road marking at several points and determining the remaining surface area of the road markings based on the measurements. The retroreflection of said road markings is likewise determined on the basis of measurements.

For its part, the patent document US 2007/0216904, published on 20 September 2007 discloses a procedure for automated determination of retroreflectivity values for reflective surfaces deployed along a road, which repeatedly illuminates a zone along the road that includes at least one reflective surface using a strobing light source

Thus, a plurality of measurements of light intensity is carried out covering a field of vision that includes at least a portion of the zone illuminated by the luminous source.

Afterwards, by employing a data processing system a portion of the light intensity values are that are associated to a reflective surface are identified and the portion of the light intensity values is analysed to determine at least one retroreflectivity value for that reflective surface.

To carry out said procedure, a processor is deployed on top of a vehicle, together with a high intensity luminous source, such as, for example, strobing light lamps, an intensity sensor, a colour camera and a positioning system that sends the information that is registered to a storage system. A preferred embodiment includes a laser for measuring distances and a pair of stereoscopic cameras.

Along the same lines, patent US 6891960, published on 10 May 2005, discloses a procedure for classifying sheeting materials on an image frame. In said image frame the colours are determined and an estimated retroreflectivity is established for the same, which is compared to a known minimum. In this way a classification of the retroreflectivity of the sheeting elements is obtained

For this, a zone of the roadway is illuminated with a light and a plurality of values of light intensity is measured. A processor identifies which portion of the values refer to the target to be measured and analyses it. To do so it uses colour images from a plurality of cameras and positioning information from a GPS which, together with the profile of the light from a luminous source, provides accuracy to the determination of the retroreflection values.

The vehicle for carrying out said procedure has a high intensity source of light mounted on it, an intensity sensor,a colour camera, a positioning system, a control system that enables recording any type of roadway marks and a processor, It can also have a mounted laser for measuring distances and two strobe lights.

Patent document US 6407674, published on 30 May 2002, refers to an retroreflection measuring apparatus for assessing the integrity of road markings.

The apparatus includes a luminous source, a light sensor and a processing means. The apparatus is mounted on a vehicle in such a way that during use the luminous source illuminates a reflective surface on a highway signal on which the light sensor detects any reflected light while the data signal is received by means of the processing medium, which processes the data to provide information on the reflectivity of said reflecting surface. An indicator directs the driver towards where he has to measure.

Patent document FR 2661248, published on 25 October 1991, discloses a procedure for continuous measurement, with ambient light, of the retroreflection of road markings wherein an incident modulated luminous beam is emitted, while a likewise modulated beam is obtained and received by photoelectric cells, and then sent through a double filter to measure the retroreflection and contrast. Said procedure can be carried out both night and day.

Said document also discloses the device for carrying out the said procedure, which includes a vehicle, a means of emission of the incident luminous beam, a means of reception of the reflected beam, a means of control of the ambient light and the luminous beam, a means for transforming the luminous currents into electric signals such as, for example, photoelectric cells, a means of treating the electrical currents with filtering circuits and a means of modulating the incident beam, such as, for example, a disc with orifices.

The inventions of the cited patents disclose procedures and devices wherein the measurements are carried out on a narrow strip of the road and for a single road marking at a time, which means that several passes are needed to cover all of the lanes of the road, with the resulting multiplication of the image and data analysis, thus requiring operator intervention at some point in time.

The present invention is a procedure and dynamic device for carrying out the solution to the cited drawbacks in the state of the art, exactly as disclosed below.

### DESCRIPTION OF THE INVENTION

In light of the above explanation, the present invention refers to a dynamic procedure of measurement of the luminance and retroreflection of road markings and signals, as well as the obtention of the shape, position and dimensions of the same.

The procedure is implemented from a vehicle that circulates on the road, in other words, in a dynamic manner or while in motion.

Said procedure comprises the following steps:
a)illumination of a zone of interest with a illuminating source,
b)positioning the vehicle by means of a global positioning system,
c)measurement of the luminance by means of a light sensor of the zone of interest in just one pass, at known distances or intervals in the same instant as that of step b),
d)simultaneous identification and extraction of one or more road markings and signals during each measurement of the luminance acquired in step c) and, in relation to the zone of interest, by means of artificial or manual vision algorithms,
e)referencing of the illumination obtained in step c) according the the measurement of step b), both geometrically and in time,
f)measurement of the road markings and signals identified in step d), and referred to in step e), for obtaining the luminance values and the retroreflection coefficient.
g)obtention of the shape, position and dimensions of said road markings and signals identified in step d) and referred to in step 3).

The implementation of the present procedure enables characterising and assessing the values of luminance and retroreflection, as well as obtaining the shape, position and dimensions of several road markings and signals in a simultaneous and dynamic manner, by means of luminance processing means acquired during the disclosed procedure, likewise known as auscultation.

Moreover, the procedure is applicable in environments where the external illumination is not controllable, that is, it is insensible to other illuminations that could be contaminants, such that the auscultations may be carried out during both night and day.

The present invention comprises the device that enables carrying out the disclosed procedure, being the vehicle itself that which includes an illuminating source, a global vehicle positioning system, a light sensor, a camera, a data processor and a data storage device.

### DESCRIPTION OF THE DRAWINGS

The present document is complemented with a set of drawings as an example for illustrating the preferred embodiment, and which in no way limits the invention.

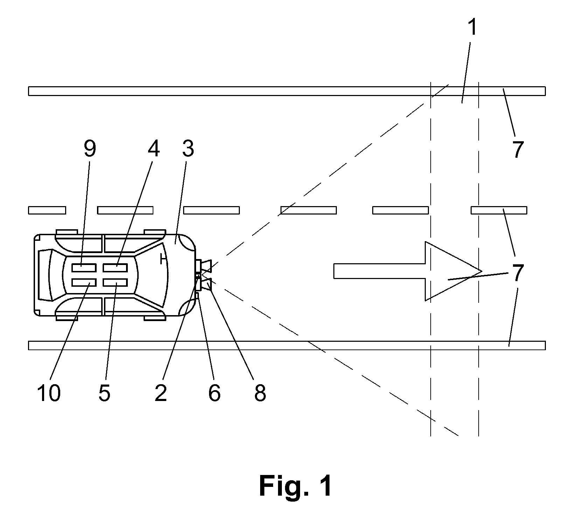

Figure 1 represents an overhead view of a vehicle equipped for carrying out the disclosed procedure circulating in the right lane of a road.

### PREFERRED EMBODIMENT OF THE INVENTION

The present invention deals with a dynamic procedure of measurement of the luminance and retroreflection of road markings and signals (7), as well as the obtention of the shape, position and dimensions of the same from a vehicle (3) that circulates on the road.

The measurement of the luminance and retroreflection is carried out in a dynamic manner on several road markings and signals (7) simultaneously, as is also the obtention of the shape, position and dimensions of road markings and signals (7) detected during a measurement of luminance acquired through a process of auscultation, together with the data compiled from light sensor (6).

The implementation of the procedure is carried out from a vehicle (3) that circulates on the road.

The disclosed embodiment begins by illuminating a zone of interest (1) on the road with a strong illuminating source (2), from which it is possible to determine its light emission in the space, with the possibility of said illuminating source being continuous or pulsating.

Said zone of interest (1) is a broad area which comprises, in this embodiment, an angle of vision equal to or larger than that of a user, making reference to the fact that it illuminates a large transversal band of the road, normally the full width of the road or, when it is very large, the majority thereof. For example, on four lane roads, the full width of the road is illuminated, while on five or more lane roads, practically the full width is illuminated.

Next, the position of the vehicle is determined by means of global positioning system (4), such as, for example, a GPS.

Subsequently the luminance is measured by means of light sensor (6) at known distances or intervals, at the same instant in which the position of vehicle (3) is determined.

Immediately afterwards, one or several road markings or signals (7) are simultaneously identified and extracted from each measurement of luminance in relation to zone of interest (1), by means of artificial or manual vision algorithms.

That is, in the measurements of luminance by means of algorithms of artificial vision (or by manual means), road marking and signals (7) of interest are identified and extracted, with measurements that may contain the same simultaneous measurement of several road markings and signals (7), or of shapes and sizes that differ from each other, for example, having the shape of an arrow, of a traffic signal drawn on the road, different colours, etc.

Next, the measurements and values obtained by cameras (8), sensors (6), at very least the light sensor, are referenced both geometrically and in time.

After road markings and signals (7) are identified and referenced, the luminance and retroreflection values of each one of the road markings and signals are measured over them, such that their shape, position and dimensions are also obtained.

This is possible because said road markings and signals are geo-referenced (for example by means of a GPS or odometer), both geometrically and in time, in the moment that the luminance is measured and the valuers of sensors (6) are acquired.

In one variant, in step c) the measurement of luminance is done through images, which are acquired by means of multiple light sensors (6) that comprise a photosensitive plate, in step d) one or several road markings and signals (7) are identified and extracted from said images and the values obtained in step c), in such a way that the values and dimensions of steps f) and g) are obtained.

Likewise, in step c) values from sensors other than the light sensor can be acquired, for example, GPS, odometer, temperature, humidity and others.

The option exists of determining the luminous emission in the space from the luminous source (2), which facilitates the measurements and calculations.

As another option, the device employed for measuring luminance is a luminance meter. As still another option, the device for measuring the retroreflection is a retroreflector meter.

For the measurement of the luminance and the retroreflection, cameras (8) are calibrated for luminance and the photometry is known of light bulbs (2, which serves as the luminous source from which the spatial distribution of the amount of light that it provides is known.

Both bulbs (2) and cameras (9) are referenced to the same set of coordinates of vehicle (3) and are joined to the chassis thereof.

As an optional way, the coefficient of retroreflection of said road markings and signals (7) are obtained for a specific geometry on the basis of the amount of light provided by luminous source (2), luminance, and the luminance measured on road markings and signals (7), in other words, the luminance collected by cameras (8).

As a preferred manner, luminous source (2) is constantly turned on, although it could be a pulsing source, in order for the procedure to avoid contamination from other luminous sources.

Optionally, as an advantageous way, as has been shown, while vehicle (3) is in movement, the relative position and orientation of said vehicle is measured with respect of the road, by means of a positioning and orienting system relative to road (5), for example, by means of an inertial navigation system which includes, at a minimum, a gyroscope and an accelerometer.

Said in another way, we have a system of measurement which references known fixed parts of vehicle (3) with respect to a system of global coordinates, employing a system of positioning and orientation relative to the road (5).

Thus, in a concrete way the reference of vehicle (3) with respect of the road is obtained by means of range finders located on the vehicle in such a way that information is obtained on the position and orientation of the vehicle with respect of the road, this being a system of positioning and orientation relative to road (5).

Therefore, with the data from the measurement system, the position and orientation of vehicle (3) can be obtained with respect of a system of coordinates on the ground surface (in reference to the road).

In this way at any moment the geometry (position and orientation) is known relative to points on the road and the measurement systems of vehicle (3), which may be influenced by variations, mainly by the movement of the vehicle and irregularities on the road that occur during the procedure, both in the vehicle and on the road.

With knowledge of the orientation of vehicle (3) it is also possible to know the orientation of cameras (9), which are fixed to the chassis of the vehicle. It suffices to know the dimensions of each camera (8) and the distance that exists between it and the system of coordinates of the vehicle.

That is, by knowing the orientation of each camera (8) geometric references are also known of each of the measurements obtained, identifying in each pixel the distances to which they would correspond, supported by the data from global positioning system (4) and from the positioning and orientation system relative to road (5).

The described procedure may be done in an automatic manner given that the steps of the same are carried out by automated instruments, like those found in the market.

For the measurement of the luminance and retroreflection of the road markings and signal, and the obtention of the dimensions of the same in accordance with the above explanation, a device installed in vehicle (3) is configured, which comprises at least luminous source (2), from which the luminous emission in space may be determined, the global positioning system of vehicle (4), light sensor (6), camera (8), data processor (9) and data storage device (10).

As an option, the device may include a position measurer of the position and orientation of the vehicle with respect to the road(5).

Specifically, GPS, odometer, temperature and humidity sensors may be included.

## Claims

1. Dynamic procedure of measurement of the luminance and retroreflection of the road markings and signals and obtention of the dimensions of the same from a vehicle that circulates along the road, **characterised in that** it comprises the following steps:
a.illumination of zone of interest (1) with illuminating source (2),
b.positioning of vehicle (3) by means of global positioning system (4),
c.measurement of the luminance by means of light sensor 6) of the zone of interest in a single pass, at distances or intervals known in the same moment as step b),
d.simultaneous identification and extraction of one or more road markings and signals (7) during each measurement of the illumination acquired in step c) and, in relation to the zone of interest, by means of artificial or manual vision algorithms,
e.referencing of the illumination obtained in step c) according the the measurement of step b), both geometrically and in time,
f.measurement over road markings and signals (7) identified in step d), and referred to in step e), of the luminance values and the of retroreflection coefficient.
g.obtention of the shape, position and dimensions of said road markings and signals (7) identified in step d) and referred to in step e).

2. Dynamic measurement and calculation procedure of the luminance and retroreflection of the road markings and signals in accordance with claim 1, wherein in step c) the measurement of luminance is done through images that are acquired by means of multiple light sensors (6), which comprise a photosensitive plate; in step d) one or several road markings and signals (7) are identified and extracted from said images and values obtained in step c), in such a way that the values and dimensions of steps f) and g) are obtained.

3. Dynamic measurement and calculation procedure of the luminance and retroreflection of the road markings and signals in accordance with claim 1, wherein zone of interest (1) is a broad area, which comprises an angle of vision equal to or greater than that of a user.

4. Dynamic measurement and calculation procedure of the luminance and retroreflection of the road markings and signals in accordance with claim 1, wherein in step c) values are acquired from sensors such as GPS, odometer, temperature and humidity.

5. Dynamic measurement and calculation procedure of the luminance and retroreflection of the road markings and signals in accordance with claim 1, wherein the coefficient of retroreflection of said road markings and signals (7) are obtained for a specific geometry on the basis of the amount of light provided by luminous source (2), and the luminance measured on road markings and signals (7),

6. Dynamic measurement and calculation procedure of the luminance and retroreflection of the road markings and signals in accordance with claim 1, wherein luminous source (2)is illuminated in a continuous manner.

7. Dynamic measurement and calculation procedure of the luminance and retroreflection of the road markings and signal in accordance with claim 1, wherein luminous source (2)is illuminated in a pulsing mode in order to avoid contamination from other luminous sources.

8. Dynamic measurement and calculation procedure of the luminance and retroreflection of the road markings and signals in accordance with claim 1, wherein the luminous emission in space is known from luminous source (2).

9. Dynamic measurement and calculation procedure of the luminance and retroreflection of the road markings and signals in accordance with claim 1, wherein the device employed for measuring luminance is a luminance meter.

10. Dynamic measurement and calculation procedure of the luminance and retroreflection of the road markings and signals in accordance with claim 1, wherein the device employed for measuring retroreflection is a retroreflector meter.

11. Dynamic measurement and calculation procedure of the luminance and retroreflection of the road markings and signals in accordance with claim 1, wherein the procedure is automatic.

12. Dynamic measurement and calculation procedure of the luminance and retroreflection of the road markings and signals in accordance with claim 1, wherein the relative position and orientation of the vehicle to the road is measured by means of a positioning and orientation system relative to road (5), in order to obtain greater accuracy in the measurements.

13. Device for the measurement of the luminance and retroreflection of the road markings and signals, and the obtention of the dimensions of the same in accordance with any of the previous claims, installed in vehicle (3), **characterised in that** it comprises luminous source (2), a global positioning system of vehicle (4), light sensor (6), camera (8), data processor (9) and data storage device (10).

14. Device in accordance with claim 13, which further comprises a position measurer of the position and orientation of the vehicle with respect of the road(5).

15. Device in accordance with claim 13, which also comprises GPS, odometer, temperature and humidity sensors.

## Amended claims

### Amended claims under Art. 19.1 PCT

1. Dynamic procedure of measurement of the luminance and retroreflection of the road markings and signals and obtention of the dimensions of the same from a vehicle that circulates along the road, **characterised in that** it comprises the following steps:
a.illumination of zone of interest (1) with illuminating source (2) included in the vehicle (3),
b.positioning of vehicle (3) by means of global positioning system (4),
c.measurement of the luminance by means of light sensor 6) of the zone of interest in a single pass, at distances or intervals known in the same moment as step b),
d.simultaneous identification and extraction of one or more road markings and signals (7) during each measurement of the illumination acquired in step c) and, in relation to the zone of interest, by means of artificial or manual vision algorithms,
e.referencing of the illumination obtained in step c) according the the measurement of step b), both geometrically and in time,
f.measurement over road markings and signals (7) identified in step d), and referred to in step e), of the luminance values and the of retroreflection coefficient.
g.obtention of the shape, position and dimensions of said road markings and signals (7) identified in step d) and referred to in step e).

2. Dynamic measurement and calculation procedure of the luminance and retroreflection of the road markings and signals in accordance with claim 1, wherein in step c) the measurement of luminance is done through images that are acquired by means of multiple light sensors (6), which comprise a photosensitive plate; in step d) one or several road markings and signals (7) are identified and extracted from said images and values obtained in step c), in such a way that the values and dimensions of steps f) and g) are obtained.

3. Dynamic measurement and calculation procedure of the luminance and retroreflection of the road markings and signals in accordance with claim 1, wherein zone of interest (1) is a broad area, which comprises an angle of vision equal to or greater than that of a user.

4. Dynamic measurement and calculation procedure of the luminance and retroreflection of the road markings and signals in accordance with claim 1, wherein in step c) values are acquired from sensors such as GPS, odometer, temperature and humidity.

5. Dynamic measurement and calculation procedure of the luminance and retroreflection of the road markings and signals in accordance with claim 1, wherein the coefficient of retroreflection of said road markings and signals (7) are obtained for a specific geometry on the basis of the amount of light provided by luminous source (2), and the luminance measured on road markings and signals (7),

6. Dynamic measurement and calculation procedure of the luminance and retroreflection of the road markings and signals in accordance with claim 1, wherein luminous source (2)is illuminated in a continuous manner.

7. Dynamic measurement and calculation procedure of the luminance and retroreflection of the road markings and signal in accordance with claim 1, wherein luminous source (2)is illuminated in a pulsing mode in order to avoid contamination from other luminous sources.

8. Dynamic measurement and calculation procedure of the luminance and retroreflection of the road markings and signals in accordance with claim 1, wherein the luminous emission in space is known from luminous source (2).

9. Dynamic measurement and calculation procedure of the luminance and retroreflection of the road markings and signals in accordance with claim 1, wherein the device employed for measuring luminance is a luminance meter.

10. Dynamic measurement and calculation procedure of the luminance and retroreflection of the road markings and signals in accordance with claim 1, wherein the device employed for measuring retroreflection is a retroreflector meter.

11. Dynamic measurement and calculation procedure of the luminance and retroreflection of the road markings and signals in accordance with claim 1, wherein the procedure is automatic.

12. Dynamic measurement and calculation procedure of the luminance and retroreflection of the road markings and signals in accordance with claim 1, wherein the relative position and orientation of the vehicle to the road is measured by means of a positioning and orientation system relative to road (5), in order to obtain greater accuracy in the measurements.

13. Device for the measurement of the luminance and retroreflection of the road markings and signals, and the obtention of the dimensions of the same from a vehicle (3) that circulates along the road, following the next steps:
a.illumination of zone of interest (1) with illuminating source (2) included in the vehicle (3),
b.positioning of vehicle (3) by means of global positioning system (4),
c.measurement of the luminance by means of light sensor 6) of the zone of interest in a single pass, at distances or intervals known in the same moment as step b),
d.simultaneous identification and extraction of one or more road markings and signals (7) during each measurement of the illumination acquired in step c) and, in relation to the zone of interest, by means of artificial or manual vision algorithms,
e.referencing of the illumination obtained in step c) according the the measurement of step b), both geometrically and in time,
f.measurement over road markings and signals (7) identified in step d), and referred to in step e), of the luminance values and the of retroreflection coefficient.
g.obtention of the shape, position and dimensions of said road markings and signals (7) identified in step d) and referred to in step e);
the device installed in a vehicle (3), **characterised in that** it comprises luminous source (2), a global positioning system of vehicle (4), light sensor (6), camera (8), data processor (9) and data storage device (10).

14. Device in accordance with claim 13, which further comprises a position measurer of the position and orientation of the vehicle with respect of the road(5).

15. Device in accordance with claim 13, which also comprises GPS, odometer, temperature and humidity sensors.
